# EUROPÄISCHE PATENTSCHRIFT

(11) **EP 1 131 546 B1**
(45) Veröffentlichungstag und Bekanntmachung des Hinweises auf die Patenterteilung: **19.10.2005**
(21) Anmeldenummer: 00951489.4
(22) Anmeldetag: 09.08.2000
(51) Int. Cl.: F02B 27/02

(54) **SCHALTWALZE**
SHIFT DRUM
TAMBOUR D'OUVERTURE/FERMETURE

(30) Priorität: 15.09.1999 DE 19944108
(43) Veröffentlichungstag der Anmeldung: 12.09.2001
(73) Patentinhaber: Mann + Hummel GmbH, 71638 Ludwigsburg (DE)
(72) Erfinder: JESSBERGER, Thomas, D-71277 Rutesheim (DE); DOBUSCH, Heinz, D-71672 Marbach (DE)
(74) Vertreter: Voth, Gerhard
(86) Internationale Anmeldenummer: PCT/EP2000/007737
(87) Internationale Veröffentlichungsnummer: WO 2001/020144

(56) Entgegenhaltungen:
- EP-A1- 0 480 393
- WO-A2-99/20879
- DE-A1- 19 709 882
- FR-A1- 2 774 125

## Beschreibung

Die Erfindung betrifft eine Schaltwalze nach der Gattung des Patentanspruches 1.

Das Dokument DE 197 09 882 offenbart eine Schaltwalze zur Verwendung in einer Saugrohranlage für eine Mehrzylinderbrennkraftmaschine. Ein Ansaugverteiler besteht aus nebeneinander angeordneten Einzelsaugrohren, welche in einem Flansch enden, wobei in einer Längsbohrung der Einzelsaugrohre die Schaltwalze angeordnet ist und zum Verschließen und Öffnen der Einzelsaugrohre dient. An der Schaltwalze sind federwirksame Elemente vorgesehen, welche in der Geschlossenstellung der Schaltwalze axiale Dichtflächen ausbilden.

Es ist aus der DE 197 12 680 eine Schaltwalze, zur Verwendung in einer Saugrohranlage mit nebeneinander angeordneten ersten Einzelsaugrohren und innenliegenden zweiten Einzelsaugrohren für eine Mehrzylinder-Brennkraftmaschine, bekannt. Die Schaltwalze ist in eine Längsbohrung, welche zumindest die ersten oder zweiten Einzelsaugrohre schneidet, eingebracht und sie weist ein, auf ihr befestigtes Dichtungselement pro Einzelsaugrohr auf. Dieses Dichtungselement enthält zwei Dichtleisten, welche an ihren Enden mit zwei Ringelementen verbunden sind. Die Dichtleisten liegen federnd an der Eintritts- oder Austrittsöffnung der, die Schaltwalze aufnehmenden, Längsbohrung an.

Durch die einteilige Ausführung des Dichtelements sind die axiale und radiale Abdichtung in einem Bauteil zu vereinen, wobei jedoch für beide Dichtsituationen nur eine Kompromißlösung geschaffen werden kann. Bei der einteiligen Ausführung können die axialen Dichtleisten nicht spielfrei gelagert werden, weil sie an die radialen Dichtbereiche anschließen, dadurch kommt es zu Leckluftströmen zwischen dem Dichtelement und der Schaltwalze. Ein weiterer Nachteil der einteiligen Ausführung des Dichtelementes ist die doppelte Abdichtung der nebeneinander angeordneten Einzelsaugrohre voneinander. Da jedes Dichtelement zwei radiale Dichtbereiche enthält, aber zur Abdichtung der Einzelsaugrohre untereinander eine einzige radiale Komponente ausreichen würde, wird mehr Bauraum benötigt. Weiterhin ist das Spritzgießwerkzeug durch die komplexe Geometrie des Dichtelementes kompliziert und teuer.

Aus der DE 44 23 427 ist eine Ansauganlage für eine Mehrzylinder-Brennkraftmaschine bekannt, die erste und zweite Einzelsaugrohre unterschiedlicher Länge aufweist, wobei die ersten bzw. zweiten Einzelsaugrohre nebeneinander angeordnet sind. Die ersten Einzelsaugrohre sind von den zweiten Einzelsaugrohren durch eine Schaltwalze getrennt. Zur Abdichtung von zwei nebeneinander angeordneten Einzelsaugrohren sind kolbenringartige Dichtelemente auf die Schaltwalze aufgebracht, wobei ein Kolbenring zwei nebeneinander angeordnete Einzelsaugrohre voneinander trennt. Bei dieser Ausführung sind jedoch keine axialen Dichtelemente vorgesehen, welche die ersten von den zweiten Einzelsaugrohren trennen. Zur Verbesserung des Aufladeeffektes durch die Unterdruckwelle, welche durch das Öffnen der Ventile am Zylinderblock erzeugt wird, ist eine Abdichtung der ersten von den zweiten Einzelsaugrohren erforderlich.

Aufgabe der Erfindung ist die Schaffung eines Absperrorganes, welches gute Abdichteigenschaften, geringen Einbauraum und eine kostengünstige Fertigung gewährleistet. Diese Aufgabe wird durch die Merkmale des Patentanspruches 1 gelöst.

Die erfindungsgemäße Schaltwalze ist durch die Anordnung in einer Längsbohrung in vorteilhafter Weise geeignet, nebeneinander angeordnete Einzelsaugrohre, welche von der Längsbohrung geschnitten sind, gegeneinander abzudichten. Hierzu dienen die radialen Dichtmittel, die derart dimensioniert sind, daß sie im eingebauten Zustand dichtend an der, die Schaltwalze umgebenden, Längsbohrung anliegen. Hierbei kann sich die Schaltwalze in dem ortsfest stehenden radialen Dichtmittel drehen. Es ist auch möglich, daß sich die radialen Dichtmittel mit der Schaltwalze mitdrehen.

Bei der Saugrohranlage mit ersten und zweiten Einzelsaugrohren, die sich in der Länge unterscheiden, kann eine Kanalabschaltung mit der, in der Längsbohrung angeordneten Schaltwalze vorgenommen werden. Die Schaltwalze enthält hierzu separate Dichtungen, die auf der Schaltwalze befestigt sind und in der Geschlossen-Stellung die zueinander gehörenden Einzelsaugrohre voneinander abdichtet. Die Dichtungen schließen direkt an die radialen Dichtmittel an. Sie können verschiedenste Konturen aufweisen, z.B. können die Dichtflächen winklig zur Schaltwalzenachse ausgeführt sein, dadurch erhält man eine zusätzliche Führung der Schaltwalze in der Längsbohrung. Jedes erste Einzelsaugrohr besitzt eine eigene Dichtung, die von dem daneben angeordneten Einzelsaugrohr unabhängig ist. Durch die Trennung der axialen von der radialen Dichtfunktion können beide Bauteile optimal auf ihre Funktion angestimmt werden. Die Dichtung benötigt zur Befestigung auf der Schaltwalze keine, den Umfang der Schaltwalze umspannenden Elemente mehr, da die Dichtung z.B. durch Kleben auf der Schaltwalze befestigt werden kann.

Eine besondere Ausführungsform stellt die Ausbildung der Dichtung mit zwei axial wirkenden Dichtflächen dar. Die Dichtflächen der Dichtung sind so angeordnet, daß das Einzelsaugrohr in einer Geschlossen-Stellung durch die Dichtflächen abgedichtet ist und die axialen Dichtflächen direkt an die radialen Dichtmittel anschließen.

Gemäß einer weiteren Ausgestaltung der Erfindung, weist die Dichtung einen Vorspannbereich auf. Dieser Bereich wird bei der Montage gedehnt, so daß die Dichtung auf die Schaltwalze aufgebracht werden kann. Im montierten Zustand besteht weiterhin eine gewisse Vorspannkraft, die bewirkt, daß die Dichtung an der vorgegebenen Stelle verbleibt und ihre Dichtfunktion erfüllt. Der Vorspannbereich kann z.B. als Formfeder, Wellfeder oder Gummilippe ausgeführt sein.

Eine besondere Ausführungsform stellt die formschlüssige Montage der Dichtung durch z.B. Clipsen oder Verrasten dar. Hierzu weist die Schaltwalze eine Aufnahme für die Dichtung auf. Diese Aufnahme ist so gestaltet, daß Teilbereiche der Dichtung so umschlossen sind, daß die Dichtung im eingebauten Zustand auf der Schaltwalze fixiert ist. Die Aufnahme kann z.B. in Form von Haken oder Nuten ausgebildet sein.

Eine vorteilhafte Weiterbildung des Erfindungsgedankens ist Verwendung einer Dichtung mit einer Strömungskappe, die den Strömungsverlauf an der geschlossenen Öffnung der Einzelsaugrohre positiv beeinflußt und Verwirbelungen vermeidet. Die Strömungskappe kann als separates Bauteil auf eine Dichtkontur der Dichtung durch z.B. Kleben, Schweißen, Schrauben oder Verschnappen aufgebracht werden. Es ist weiterhin denkbar, daß die Strömungskappe aus einem anderen Material gefertigt ist, als die Dichtkontur.

Eine besondere Ausführung der Erfindung sieht die direkte Anformung der Strömungskappe an die Dichtung vor. Dies kann durch Spritzgießen erfolgen. Weiterhin kann die Strömungskappe durch eine entsprechende Ausgestaltung auch die Aufgabe des Vorspannbereiches übernehmen.

Eine weitere Variante der Erfindung ist die Ausbildung der Dichtung mit Spannbügel, die zur Befestigung der Dichtung auf der Schaltwalze dienen, und nur einen Teilbereich des Schaltwalzenumfanges umschließen. Die Dichtung kann mittels der Spannbügel auf der Schaltwalze verspannt werden. Eine weitere Alternative der Befestigung der Dichtung ist das Auflegen der Dichtung auf die Schaltwalze und ein anschließendes Einschieben der vormontierten Baugruppe in die Längsbohrung. Durch das Einschieben der Schaltwalze werden die einzelnen Dichtungen fest auf die Schaltwalze gedrückt und somit fixiert.

Hierbei ist eine Anformung eines Elastomers an die Dichtung besonders vorteilhaft. Das Elastomer wird bei der Montage zusammengedrückt und steht unter Vorspannung, dadurch wird eine dichtende Trennung der Einzelsaugrohre erzeugt. Weiterhin kann das Elastomer Fertigungstoleranzen ausgleichen, außerdem kompensiert das Elastomer das Relaxieren des Dichtelementes.

Es ist vorteilhaft, die Dichtung in Kunststoff auszuführen, wodurch auch aufwendige Konturen erzeugt werden können. Außerdem weist Kunststoff gute Dicht- und Gleiteigenschaften auf.

Weitere Einzelheiten der Erfindung werden anhand von schematischen Ausführungsbeispielen beschrieben.

Hierbei zeigt
- Figur 1: eine Schaltwalze in perspektivischer Darstellung,
- Figur 2: einen Ausschnitt X gemäß Figur 1 im Schnitt,
- Figur 3: eine Dichtung in Ansicht,
- Figur 4: eine Dichtung mit einer Strömungskappe in der Seitenansicht,
- Figur 5: eine Dichtung mit Strömungskappe in Ansicht,
- Figur 6: einen Schnitt durch die Schaltwalze,
- Figur 7: Saugrohranlage im Schnitt.

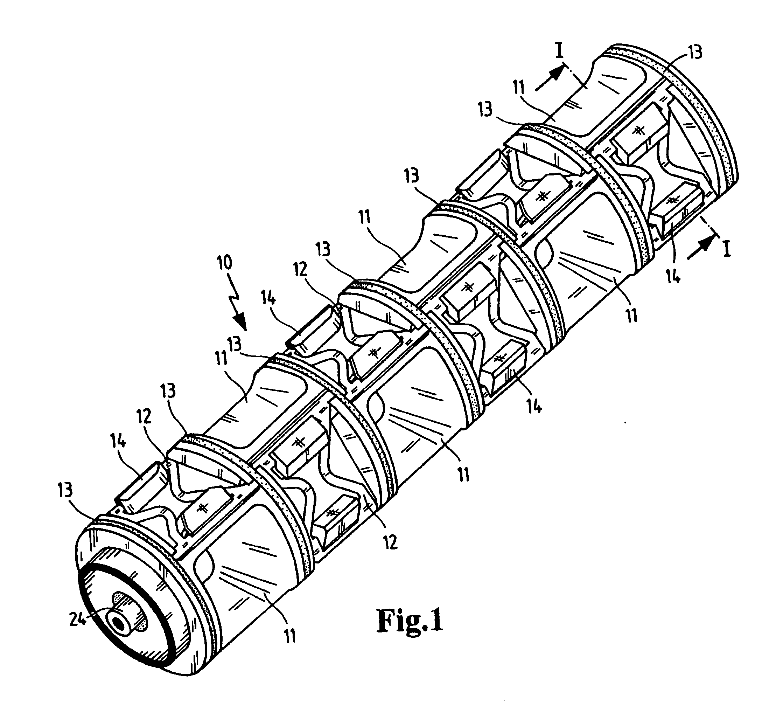

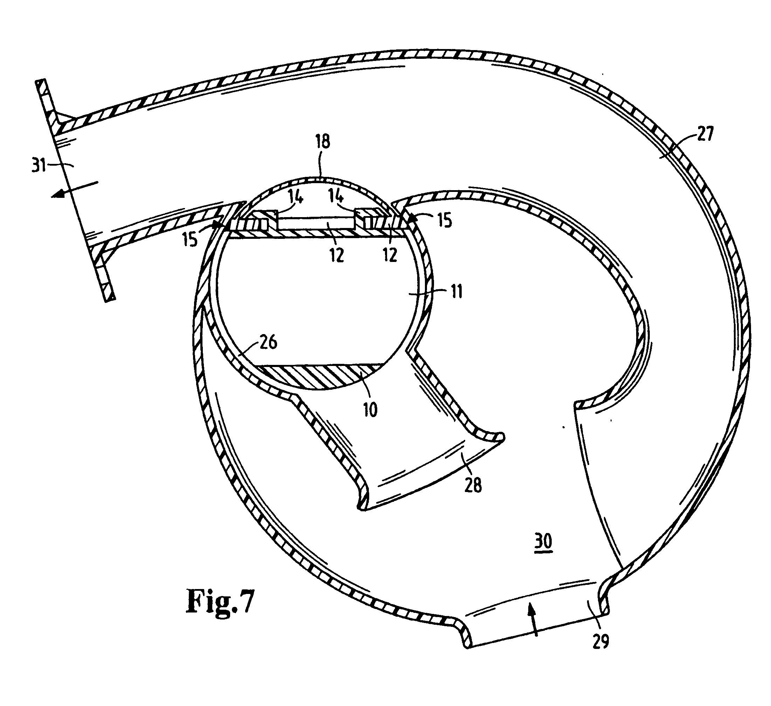

In Figur 1 ist eine Schaltwalze 10 in perspektivischer Ansicht dargestellt. Sie weist im wesentlichen Durchgangsöffnungen 11, Dichtungen 12, radiale Dichtmittel 13 und einen Lagerbereich 24 auf. Die Durchgangsöffnungen 11 sind so gestaltet, daß sie, bei entsprechender Stellung der Schaltwalze 10, erste Einzelsaugrohre 27 mit zweiten Einzelsaugrohren 28 gemäß Figur 7 einer Saugrohranlage für eine Mehrzylinder-Brennkraftmaschine verbinden. Die Dichtungen 12 sind so ausgelegt, daß eine Dichtung 12 bei einer Geschlossen-Stellung die ersten von den zweiten Einzelsaugrohren 27, 28 gemäß Figur 7 abdichten, wobei nahezu kein Leckluftstrom auftritt. Die Dichtungen 12 sind an Haken 14 eingehakt. Die radialen Dichtmittel 13 umschließen die Schaltwalze 10 am Umfang. Sie dichten parallel zueinander verlaufende Einzelsaugrohre ab und schließen direkt an die Dichtungen 12 an.

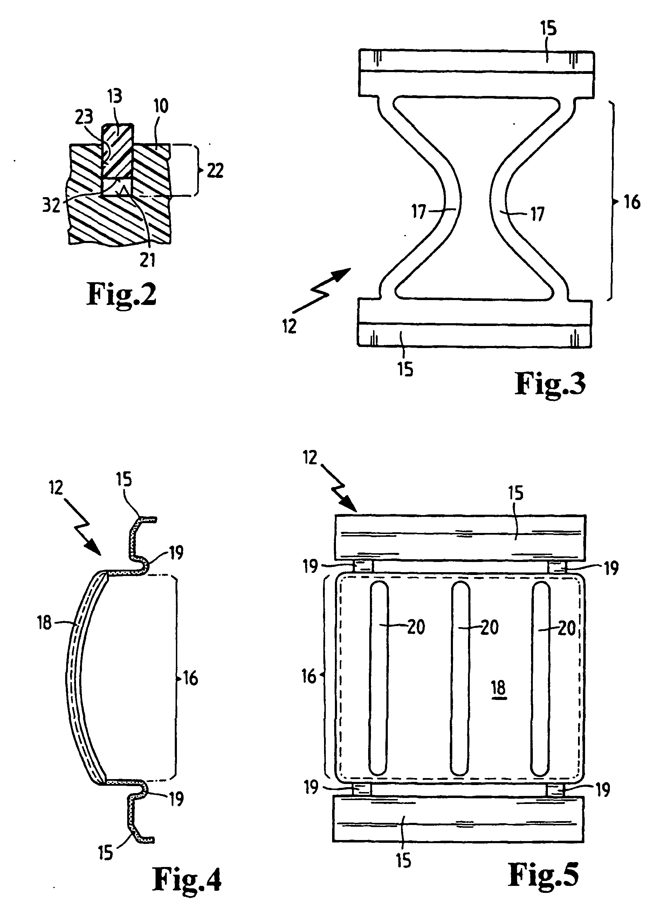

In Figur 2 ist ein Ausschnitt X gemäß Figur 1 im Schnitt dargestellt. Die radialen Dichtmittel 13 sind geschlitzt, so daß sie aufgebogen und auf die Schaltwalze 10 aufgesteckt werden können. Nach der Montage federn die radialen Dichtmittel 13 wieder zusammen und umschließen die Schaltwalze 10 vollständig. Im eingebauten Zustand stützen sich die radialen Dichtmittel 13 an der Längsbohrung 26 gemäß Figur 7 der Saugrohranlage ab, wodurch sich die Schaltwalze 10 in den radialen Dichtmitteln 13 dreht. Die Schaltwalze 10 verfügt über eine Nut 22, welche einen Außendurchmesser 21 und Seitenwände 23 aufweist. Um große Reibkräfte zwischen dem radialen Dichtmittel 13 und Schaltwalze 10 zu vermeiden, weist das radiale Dichtmittel 13 einen Innendurchmesser 32 auf, der nicht in direkten Kontakt mit dem Außendurchmesser 21 der Schaltwalze 10 steht. Somit besteht nur ein direkter Kontakt zwischen den Seitenwänden 23 und dem radialen Dichtmittel 13.

In Figur 3 ist eine Dichtung 12 dargestellt. Sie weist zwei axial wirkende Dichtflächen 15 auf. An diese axial wirkenden Dichtflächen 15 ist ein Vorspannbereich 16 angeformt, welcher zwei, spiegelbildlich zueinander verlaufende Wellfedern 17 umfaßt. Diese Wellfedern 17 sind so gestaltet, daß sie zur Montage auseinander gezogen werden können, indem sich ihre Wellenform streckt. Nachdem die Dichtung 12 auf der Schaltwalze 10 gemäß Figur 1 eingehakt ist, ziehen sich die Wellfedern 17 wieder zusammen, dadurch wird verhindert, daß sich die Dichtung 12 von der Schaltwalze 10 löst. Die Dichtung 12 ist länger, als die verfügbare Einbaulänge in der Längsbohrung 26 gemäß Figur 7, dadurch werden die axial wirkenden Dichtflächen 15 zusammengedrückt und in dem Vorspannbereich 16 wird eine Vorspannung erzeugt, welche die axial wirkenden Dichtflächen 15 gegen die Wand der Längsbohrung (hier nicht dargestellt) drückt. Die Dichtung 12 ist flach ausgebildet.

In Figur 4 ist eine Dichtung 12 mit einer Strömungskappe 18 in der Seitenansicht dargestellt. Die Strömungskappe 18 ist bogenförmig ausgeführt, dadurch kann bei besonderen Anordnungen die Luftströmung ohne Verwirbelungen weitergeführt werden. Bei diesem Ausführungsbeispiel ist die Strömungskappe 18 mittels Stege 19 an die axial wirkenden Dichtflächen 15 angeformt und bildet außerdem noch den Vorspannbereich 16. Zur Montage der Dichtung 12 wird die Strömungskappe 18 gedehnt, wodurch die Bogenform abgeflacht wird. Nachdem die Dichtung 12 eingebaut ist, zieht sich die Strömungskappe 18 wieder zusammen und bildet die Bogenform. Durch die Vorspannung in der Strömungskappe 18 wird verhindert, daß sich die Dichtung 12 von der Schaltwalze 10 gemäß Figur 1 ablöst.

In Figur 5 ist die Dichtung 12 gemäß Figur 4 in der Vorderansicht dargestellt. Die axial wirkenden Dichtflächen 15 sind durch Stege 19 mit der Strömungskappe 18 verbunden. Die Stege 19 sind so beabstandet, daß die Haken 14 gemäß Figur 1 eingreifen und die Dichtung 12 fixieren können. Die Strömungskappe 18 weist, zur Erhöhung der Steifigkeit, Sicken 20 auf.

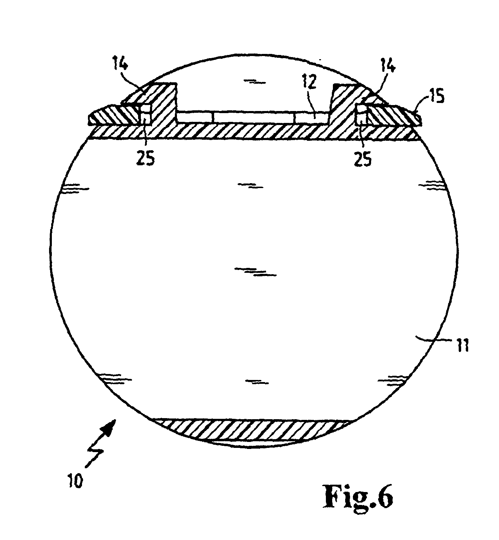

In Figur 6 ist eine Schaltwalze 10 im Schnitt gemäß der Schnittlinie I-I aus Figur 1 dargestellt. Die Dichtung 12 ist an den Haken 14 befestigt, welche so ausgebildet sind, daß sie die Dichtung 12 aufnehmen können. Die axial wirkenden Dichtflächen 15 werden bei der Montage zum Teil in einen Zwischenraum 25 gedrückt. Durch die innere Vorspannung der Dichtung 12 drückt ein Teil der axial wirkenden Dichtflächen 15 nach außen und liegt an der Längsbohrung 26 gemäß Figur 7 (hier nicht dargestellt) an. Der Vorspannbereich 16 kann Vorspannung in Richtung Längsbohrung 26 erzeugen.

In Figur 7 ist eine Saugrohranlage im Schnitt dargestellt. Sie weist einen Einlaß 29 für Luft, einen Sammelraum 30, mehrere von dem Sammelraum 30 ausgehende erste und zweite Einzelsaugrohre 27, 28 (hier ist nur ein erstes und ein zweites Einzelsaugrohr 27, 28 dargestellt), welche sich in ihrer Länge unterscheiden, einen Auslaß 31, welcher die Luft zum Zylinderkopf (hier nicht dargestellt) führt, und eine Schaltwalze 10 im eingebauten Zustand, welche in der Geschlossen-Stellung dargestellt ist, auf. Die Schaltwalze 10 befindet sich in einer Längsbohrung 26, welche die ersten Einzelsaugrohre 27 und zweiten Einzelsaugrohre 28 schneidet.

Die Dichtung 12 weist eine Strömungskappe 18 auf, wodurch die Strömung im ersten Einzelsaugrohr 27 positiv beeinflußt wird. Die axial wirkenden Dichtflächen 15 berühren die Längsbohrung 26, dadurch wird verhindert, daß Luft von dem zweiten Einzelsaugrohr 28 in das erste Einzelsaugrohr 27 gelangt. Durch Drehen der Schaltwalze 10 kann die Offen-Stellung erzeugt werden. Dann dichten die radialen Dichtmittel 13 (hier nicht dargestellt) nur noch die parallel zueinander verlaufenden Einzelsaugrohre 27 bzw. 28 voneinander ab. Die Durchgangsöffnung 11 verbindet die Einzelsaugrohre 27, 28 miteinander.

## Patentansprüche

1. Saugrohranlage (10), insbesondere einer Mehrzylinder-Brennkraftmaschine, mit einer Schaltwalze, einem Ansaugverteiler und nebeneinander angeordneten ersten Einzelsaugrohren (27), welche in einem Flansch enden, und zweiten Einzelsaugrohren (28), wobei in einer Längsbohrung (26), welche die Einzelsaugrohre (28) scheidet, die Schaltwalze (10) zum Verschließen und Öffnen der Einzelsaugrohre (27, 28) angeordnet ist und wobei die Schaltwalze (10) radiale Dichtmittel (13) zur Abdichtung der Einzelsaugrohre (27, 28) untereinander aufweist, und eine separate Dichtung (12) zur Abdichtung des geschalteten Einzelsaugrohres (28) in der Geschlossen-Stellung vorgesehen und an der Schaltwalze (10) befestigt ist, **dadurch gekennzeichnet, daß** eine Öffnung durch die Dichtung vollständig umrahmt ist.

2. Saugrohranlage nach Anspruch 1, **dadurch gekennzeichnet, daß** die Dichtung mindestens zwei axial wirkende Dichtflächen aufweist.

3. Saugrohranlage nach Anspruch 1 oder 2, **dadurch gekennzeichnet, daß** die Dichtung einen Vorspannbereich aufweist.

4. Saugrohranlage nach einem der vorangehenden Ansprüche, **dadurch gekennzeichnet, daß** die Dichtung durch Formschluß aufgebracht ist.

5. Saugrohranlage nach einem der vorangehenden Ansprüche, **dadurch gekennzeichnet, daß** die Dichtung eine Strömungskappe aufweist.

6. Saugrohranlage nach einem der vorangehenden Ansprüche, **dadurch gekennzeichnet, daß** die Strömungskappe an die Dichtung angeformt ist.

7. Saugrohranlage nach einem der vorangehenden Ansprüche, **dadurch gekennzeichnet, daß** an die Dichtung Spannbügel zur Befestigung an der Schaltwelle angeformt sind.

8. Saugrohranlage nach einem der vorangehenden Ansprüche, **dadurch gekennzeichnet, daß** an die Dichtung ein Elastomer angeformt ist.

9. Saugrohranlage nach einem der vorangehenden Ansprüche, **dadurch gekennzeichnet, daß** die Dichtung aus Kunststoff besteht.

## Claims

1. Intake manifold arrangement (10), more especially for a multicylinder internal combustion engine, said intake manifold arrangement comprising a shift drum, an induction distributor and first individual suction pipes (27) disposed side by side and ending in a flange, and second individual suction pipes (28), wherein the shift drum (10) for closing and opening the individual suction pipes (27, 28) is disposed in a longitudinal bore (26) which intersects the individual suction pipes (28), and wherein the shift drum (10) has radial sealing means (13) for sealing the individual suction pipes (27, 28) with respect to one another, and a separate seal (12) is provided for sealing the switched individual suction pipe (28) in the closed position and is attached to the shift drum (10), **characterised in that** the seal completely encircles an opening.

2. Intake manifold arrangement according to claim 1, **characterised in that** the seal has at least two axially acting sealing surfaces.

3. Intake manifold arrangement according to claim 1 or 2, **characterised in that** the seal has a prestressing area.

4. Intake manifold arrangement according to one of the preceding claims, **characterised in that** the seal is attached by an interlocking connection.

5. Intake manifold arrangement according to one of the preceding claims, **characterised in that** the seal has a flow cap.

6. Intake manifold arrangement according to one of the preceding claims, **characterised in that** the flow cap is formed onto the seal.

7. Intake manifold arrangement according to one of the preceding claims, **characterised in that** the seal has clamping elements formed thereon for attachment to the control shaft.

8. Intake manifold arrangement according to one of the preceding claims, **characterised in that** an elastomer is moulded onto the seal.

9. Intake manifold arrangement according to one of the preceding claims, **characterised in that** the seal is formed from plastics material.

## Revendications

1. Tuyauterie d'aspiration (10), notamment d'un moteur à combustion interne à plusieurs cylindres, comprenant un tambour de commutation, un distributeur d'aspiration, des premiers tubes d'aspiration individuels (27) juxtaposés se terminant dans une bride et des deuxièmes tubes d'aspiration individuels (28), dans laquelle le tambour de commutation (10) est disposé dans un alésage longitudinal (26) séparant les tubes d'aspiration individuels (28) pour fermer et ouvrir les tubes d'aspiration individuels (27, 28), et le tambour de commutation (10) présente des moyens d'étanchéité radiaux (13) pour étancher les uns par rapport aux autres les tubes d'aspiration individuels (27, 28), et une garniture d'étanchéité (12) séparée est prévue pour étancher le tube d'aspiration individuel (28) commuté dans la position fermée et fixée au tambour de commutation (10),
**caractérisée en ce qu'**
une ouverture est complètement encadrée par la garniture d'étanchéité.

2. Tuyauterie d'aspiration selon la revendication 1,
**caractérisée en ce que**
la garniture d'étanchéité présente au moins deux surfaces d'étanchéité agissant axialement.

3. Tuyauterie d'aspiration selon la revendication 1 ou 2,
**caractérisée en ce que**
la garniture d'étanchéité présente une zone de précontrainte.

4. Tuyauterie d'aspiration selon l'une quelconque des revendications précédentes,
**caractérisée en ce que**
la garniture d'étanchéité est appliquée par complémentarité de forme.

5. Tuyauterie d'aspiration selon l'une quelconque des revendications précédentes,
**caractérisée en ce que**
la garniture d'étanchéité présente une calotte d'écoulement.

6. Tuyauterie d'aspiration selon l'une quelconque des revendications précédentes,
**caractérisée en ce que**
la calotte d'écoulement est rapportée par moulage sur la garniture d'étanchéité.

7. Tuyauterie d'aspiration selon l'une quelconque des revendications précédentes,
**caractérisée en ce que**
des étriers de serrage sont rapportés par moulage sur la garniture d'étanchéité pour la fixation au tambour de commutation.

8. Tuyauterie d'aspiration selon l'une quelconque des revendications précédentes,
**caractérisée en ce qu'**
un élastomère est rapporté par moulage sur la garniture d'étanchéité.

9. Tuyauterie d'aspiration selon l'une quelconque des revendications précédentes,
**caractérisée en ce que**
la garniture d'étanchéité est en matière plastique.
